# EUROPÄISCHE PATENTSCHRIFT

(11) **EP 2 893 196 B1**
(45) Veröffentlichungstag und Bekanntmachung des Hinweises auf die Patenterteilung: **24.08.2016**
(21) Anmeldenummer: 13753816.1
(22) Anmeldetag: 29.08.2013
(51) Int. Cl.: F15B 11/10, F15B 13/04

(54) **FLUIDISCHER STELLANTRIEB**
FLUIDIC ACTUATOR
ACTIONNEUR FLUIDIQUE

(30) Priorität: 07.09.2012 DE 102012017713
(43) Veröffentlichungstag der Anmeldung: 15.07.2015
(73) Patentinhaber: Hoerbiger Automatisierungstechnik Holding GmbH, 86972 Altenstadt (DE)
(72) Erfinder: HALLER, Daniel, 70569 Stuttgart (DE); SCHROBENHAUSER, Max, 86971 Peiting (DE); RANKL, Erich, 86935 Rott (DE); GRÖDL, Marcus, 87640 Altdorf (DE)
(74) Vertreter: Grättinger Möhring von Poschinger Patentanwälte Partnerschaft
(86) Internationale Anmeldenummer: PCT/EP2013/002599
(87) Internationale Veröffentlichungsnummer: WO 2014/037090

(56) Entgegenhaltungen:
- DE-A1- 2 654 219
- DE-A1-102007 058 518
- DE-A1-102009 023 706

## Beschreibung

Die vorliegende Erfindung betrifft einen fluidischen, insbesondere pneumatischen Stellantrieb, insbesondere Armaturen-Stellantrieb, umfassend ein mit Druckfluid (insbesondere Druckluft) beaufschlagbares Antriebselement und einen die Druckfluid-Beaufschlagung des Antriebselements regelnden proportionalen Stellungsregler.

Fluidische Armaturen-Stellantriebe sind in verschiedenen Bauweisen bekannt und im Einsatz. Zu verweisen ist insoweit beispielsweise auf die DE 19537493 C1, die EP 1751640 B1, die EP 918939 B1, die DE 102009023706 A1, die EP 1758007 A1, die GB 2485049 A, die EP 822344 A2, die DE 19502212 C1.

Wie den verschiedenen vorstehend genannten Dokumenten zum Stand der Technik im Einzelnen entnehmbar ist, sind einen proportionalen Stellungsregler aufweisende fluidische Stellantriebe typischerweise ausgesprochen aufwendig. Dies ist von Nachteil nicht nur im Hinblick auf die Herstellungskosten. Eine aufwendige fluidische Verschaltung der einzelnen Komponenten des Stellantriebs birgt zudem die Gefahr gewisser Instabilitäten des Systems.

Aus der DE 102007058518 A1 ist ein pneumatischer Armaturen-Stellantrieb bekannt, der ebenfalls ein mit Druckluft beaufschlagbares Antriebselement und einen die Druckluft-Beaufschlagung des Antriebselements regelnden proportionalen Stellungsregler umfasst, sich gegenüber dem weiter oben dargelegten Stand der Technik (z.B. DE 102009023706 A1) allerdings dadurch auszeichnet, dass die elektro-fluidische Vorstufe genau einen elektromechanischen Wandler (Piezo-Biegewandler) und genau ein von diesem betätigtes Proportionalventil (Düse-Prallplatten-System) umfasst. Mit dem Ausgang des Proportionalventils sind, über entsprechende Steuerdruckleitungen, die Steuerdruckeingänge der beiden Ventile der Leitungsstufe verbunden.

Die vorliegende Erfindung strebt an, im Hinblick auf die weiter oben darglegten Nachteile des Standes der Technik Abhilfe zu schaffen, insbesondere indem ein fluidischer Stellantrieb der eingangs angegebenen Art bereitgestellt wird, der sich bei einem vergleichsweise geringem Aufwand durch eine zuverlässige Funktion bei hoher Betriebssicherheit auszeichnet, wobei zugleich eine höhere Effizienz erreicht werden soll als bei dem fluidischen Stellantrieb nach der DE 102007058518 A1.

Gelöst wir diese Aufgabenstellung gemäß der vorliegenden Erfindung durch den in Anspruch 1 im Einzelnen angegebenen fluidischen Stellantrieb. Dieser zeichnet sich somit durch eine Vielzahl technisch-funktional synergetisch zusammenwirkender Merkmale aus, wobei für den erfindungsgemäßen (zweistufig ausgeführten, eine elektro-fluidische Vorstufe und eine fluidische Leistungsstufe aufweisenden) Stellungsregler unter anderem charakteristisch ist, dass die beiden Ventile der Leitungsstufe als Sitzventile ausgeführt und in einem gemeinsamen Gehäuse untergebracht sind und dass die elektro-fluidische Vorstufe genau einen elektromechanischen Wandler und genau ein von diesem betätigtes Proportionalventil umfasst, wobei der Steuerdruckausgang der elektro-fluidischen Vorstufe auf einen Steuerraum der fluidischen Leistungsstufe wirkt. Aus jenem (gemeinsamen) Steuerraum, der in dem die Sitzventile aufnehmenden Gehäuse zwischen den Sitzventilen angeordnet ist, werden dabei zwei Druck-Weg-Wandler beaufschlagt, von denen jeder auf eines von zwei Sitzventilen der fluidischen Leistungsstufe wirkt. Bei drucklosem Steuerraum ist dabei das erste der beiden Sitzventile in eine geöffnete und das zweite der beiden Sitzventile in eine geschlossene Stellung vorgespannt. Die beiden Druck-Weg-Wandler sind dabei dergestalt ausgelegt und aufeinander abgestimmt, dass über einen Druckverlauf, d.h. einen Druckanstieg innerhalb eines Betriebsbereiches eine klare Hierarchie der Betätigung der beiden Sitzventile (d.h. eine sequentielle Betätigung der beiden Sitzventile) besteht, und zwar dergestalt, dass zunächst das erste Sitzventil fortschreitend geschlossen und erst nach dem vollständigen Schließen des ersten Sitzventils das zweite Sitzventil fortschreitend geöffnet wird. Auf diese Weise ergibt sich eine eineindeutige Zuordnung des Drucks in dem Steuerraum zu dem durch den Schaltzustand der beiden Sitzventile definierten Betriebspunkt und umgekehrt. Durch eine solche eindeutige Zuordnung im Sinne einer eindeutigen Charakteristik des Stellungsreglers ist dieser trotz seines geringen baulichen und apparativen Aufwands regelungstechnisch leicht zu beherrschen, sodass insbesondere Instabilitäten vermieden werden können. Zudem zeichnet sich der erfindungsgemäße Stellungsregler, anders als dies für Schieberventile verwendende Stellungsregler gilt, durch eine gänzlich leckagefreie (oder allenfalls eine vernachlässigbare Leckage aufweisende) Leistungsstufe aus, was insbesondere unter Gesichtspunkten der Effizienz ein herausragender Vorteil ist, weil hierdurch ein tatsächliches "Sperren" bzw. "Halten" des angeschlossenen Antriebselements (s.u.) ohne permanente Druckfluid-Beaufschlagung möglich ist.

Die im Rahmen der vorliegenden Erfindung genutzte Abstimmung der beiden Druck-Weg-Wandler aufeinander im Sinne der dargelegten Hierarchie bzw. Betätigungssequenz lässt sich dabei erreichen durch eine geeignete konstruktive Auslegung der Flächenverhältnisse der beiden Druck-Weg-Wandler, auf welche der in dem Steuerraum herrschende Steuerdruck wirkt, wie auch durch Abstimmung der auf die beiden Sitzventile wirkenden Vorspannkräfte sowohl aufeinander als auch auf die jeweils zugeordnete wirksame Fläche des betreffenden Druck-Weg-Wandlers.

Durch den proportionalen Betrieb von Vor- und Hauptstufe des Stellungsreglers wird eine besonders hohe, gegenüber einer pulsweitenmodulierten Ansteuerung des Antriebselements signifikant gesteigerte Lebensdauer des Stellantriebs erreicht, und zwar nicht zuletzt dadurch, dass sämtliche Ventile im Betrieb vorwiegend eine Teilauslenkung erfahren und nur selten über ihren gesamten Bewegungsbereich betätigt werden.

Gemäß einer ersten bevorzugten Weiterbildung der vorliegenden Erfindung sind innerhalb eines - einen "Sperrbereich" bildenden - Teilbereiches des Arbeitsdruckbereiches für den Steuerdruck beide Sitzventile geschlossen. Mit anderen Worten: Bei einem Druckanstieg innerhalb des Arbeitsdruckbereiches öffnet das zweite Sitzventil nicht mehr oder weniger gleichzeitig, d.h. bei dem selben Steuerdruck, bei welchem das erste Sitzventil vollständig schließt. Sondern vielmehr es besteht für den Steuerdruck ein mehr oder weniger ausgeprägter Bereich, innerhalb dessen beide Sitzventile geschlossen sind. Besonders bevorzugt nimmt der betreffende Sperrbereich dabei zwischen 10% und 30% des vom Steuerdruck insgesamt erreichbaren Steuerdruckbereichs ein. Dergleichen ist für ein stabiles Betriebsverhalten von großem Vorteil. Zudem ist dies unter Gesichtspunkten der Effizienz günstig, weil hierdurch ein Beitrag dazu geleistet wird, dass in der Leistungsstufe in dem besagten Sperrbereich keinerlei Eigenluftverbrauch besteht. Dies entlastet die Druckversorgung in dem jeweiligen Betriebspunkt "Halten", d.h. bei Aufrechterhaltung des jeweiligen Arbeitspunktes des Antriebselements. Nur bei Veränderung des Arbeitspunkts des Antriebselements - beispielsweise zum Öffnen bzw. Schließen der von dem betreffenden Stellantrieb betätigten Armatur - entsteht somit in der Leistungsstufe des Stellantriebs ein Eigenverbrauch an Druckfluid. Besonders bevorzugt sind dabei die einzelnen Komponenten des Stellantriebs dergestalt aufeinander abgestimmt, dass eine gewisse Symmetrie der Betriebscharakteristik vorliegt dergestalt, dass der Mittelwert des Steuerdruckbereiches bevorzugt innerhalb des vorstehend erläuterten Sperrbereichs liegt.

Eine andere bevorzugte Weiterbildung der vorliegenden Erfindung zeichnet sich dadurch aus, dass der Arbeitsdruckbereich zwischen 95% und 85% des vom Steuerdruck insgesamt erreichbaren Steuerdruckbereichs ausmacht. In diesem Sinne wirkt sich besonders bevorzugt beispielsweise "nur" über 90% des vom Steuerdruck insgesamt erreichbaren Steuerdruckbereichs eine Änderung des Steuerdrucks auf eine Veränderung der Stellung der beiden Sitzventile aus. Dem entspricht, dass beispielsweise die ersten und die letzten 5% des Steuerdruckbereichs in dem Sinne "tot" sind, als das Schließen des ersten Sitzventils erst beginnt, wenn der Steuerdruck 5% des maximalen Steuerdrucks erreicht bzw.

überschreitet und dass das Öffnen des zweiten Sitzventils abgeschlossen ist, wenn der Steuerdruck 95% des maximalen Steuerdrucks erreicht.

Gemäß einer wiederum anderen besonders bevorzugten Weiterbildung weisen die jeweils ein Sitzventil und den zugeordneten Druck-Weg-Wandler umfassenden Einheiten einen nicht-linearen Verlauf der Kennlinie des Öffnungsquerschnitts über dem Steuerdruck auf. Vielmehr ist die Kennlinie bevorzugt benachbart zu dem jeweils vollständig geschlossenen Bereich des betreffenden Sitzventils in dem Sinne flach, als eine bestimmte Veränderung des Öffnungsquerschnitts eine größere Veränderung des Steuerdrucks erfordert als in einem vom vollständig geschlossenen Ventil weiter entfernten Bereich. Mit anderen Worten, der das Verhältnis des Öffnungsquerschnitts zum Steuerdruck bestimmende Gradient ist bei beiden Sitzventilen besonders bevorzugt nahe dem jeweiligen Schließpunkt flacher als weiter entfernt vom jeweiligen Schließpunkt. Dies ermöglicht eine besonders feinfühlige Beaufschlagung des Antriebselements des Stellantriebs im Rahmen der Feinregelung insbesondere der von dem Stellantrieb betätigten Armatur. Auch dies ist wiederum ein Gesichtspunkt, der von großem Vorteil ist im Hinblick auf die Stabilität der Regelung. Eine entsprechende Abstimmung der Komponenten im Hinblick auf die besagte Nicht-Linearität kann dabei nicht nur am jeweiligen Druck-Weg-Wandler ansetzen, insbesondere an der Charakteristik der jeweiligen Rückstellfeder. Vielmehr ist auch eine solche Abstimmung am Sitzventil selbst möglich. Namentlich indem diese weich dichtend ausgeführt sind, wobei besonders bevorzugt jeweils ein weicher Ventilsitz mit einer Härte zwischen Shore 70 und Shore 85 vorgesehen ist. Zur Erzeugung des besagten flachen Gradienten der Kennlinie können die Dichtkanten dergestalt auf die Härte des jeweiligen Ventilsitzes abgestimmt sein, dass - durch entsprechende Formgebung - ein Öffnungsspalt zunächst nicht über den gesamten Umfang der Dichtkante gebildet wird, sondern vielmehr nur über einen Teilbereich der Dichtkante. Besonders vorteilhaft ist im Hinblick auf die vorstehend erläuterten weichdichtenden Eigenschaften des Sitzventils, wenn der Ventilsitz an einer gefassten Dichtung ausgeführt ist, wobei die Dichtkante besonders bevorzugt auf dem bewegbaren Ventilkörper (Schließkörper) ausgeführt ist.

Eine andere bevorzugte Weiterbildung der Erfindung zeichnet sich dadurch aus, dass mit der Spindel jedes Sitzventils eine zugeordnete Steuerdruckmembran verbunden ist, welche den Steuerraum gegenüber einer ersten Ventilkammer des jeweiligen Sitzventils abdichtet. Die betreffende Steuerdruckmembran ist dabei Teil des jeweiligen Druck-Weg-Wandlers und stellt die für den Steuerdruck wirksame Fläche zur Verfügung. Die weiter oben im einzelnen dargelegte Hierarchie der Betätigung der beiden Sitzventile bei sich ändernden Druckverhältnissen im Steuerraum kann dabei insbesondere durch entsprechende Einflussnahme auf die Steuerdruckmembranen erfolgen, insbesondere hinsichtlich der Dimensionierung, Dicke und/oder Materialwahl dergestalt, dass der dem zweiten Sitzventil zugeordnete Druck-Weg-Wandler erst bei höheren Steuerdrücken anspricht als der dem ersten Sitzventil zugeordnete Druck-Weg-Wandler.

Besonders bevorzugt ist dabei mit der Spindel jedes Sitzventils jeweils eine zweite Membran verbunden, welche die zweite Ventilkammer des jeweiligen Sitzventils gegenüber der Umgebung abdichtet. Indessen kommen aber in technischer Umsetzung der vorliegenden Erfindung auch andere Formen der Abdichtung der jeweiligen zweiten Ventilkammer gegenüber der Umgebung in Betracht. Auch die besagte zweite Membran kann herangezogen werden, um die für die vorliegende Erfindung wesentliche Charakteristik der hierarchischen Betätigung der beiden Sitzventile bei sich ändernden Druckverhältnissen zu bewirken.

Eine wiederum andere bevorzugte Weiterbildung der Erfindung zeichnet sich dadurch aus, dass die jeweils ein Sitzventil und den zugeordneten Druck-Weg-Wandler umfassenden Einheiten einander diametral gegenüber liegen. Die Ventilspindeln der beiden Sitzventile können dabei (müssen allerdings nicht) auf der identischen Achse liegen. Hierdurch ergibt sich die in regelungstechnischer Hinsicht besonders attraktive Möglichkeit, mit einem einzigen Sensor, welcher den Relativabstand von steuerdruckreaktiven Elementen der beiden Druck-Weg-Wandler und/oder der Ventilspindeln zueinander erfasst, den Schaltzustand der Leistungsstufe des Stellungsreglers exakt zu ermitteln. D.h., das Signal eines einzigen Sensors kann Aufschluss geben über die Stellung beider Sitzventile und somit den aktuellen Betriebspunkt des Stellungsreglers. Das betreffende Signal kann dabei als "Ist-Signal" auf die Regeleinheit des Stellungsreglers zurückgeführt werden. In baulicher Hinsicht ist dabei besonders günstig, wenn der Sensor auf einer Steuerplatine angeordnet ist, welche ihrerseits zwischen steuerdruckreaktiven Elementen (z.B. Steuerdruckmembran) der beiden Druck-Weg-Wandler angeordnet ist. Jedenfalls bei Ausführungsformen, bei denen in dem vorstehend dargelegten Sinne ein Sensor vorgesehen ist, welcher den Relativabstand von steuerdruckreaktiven Elementen der beiden Druck-Weg-Wandler und/oder der Ventilspindeln zueinander erfasst, liegt keine starre Koppelung der den beiden Sitzventilen zugeordneten Druck-Weg-Wandler und/oder Ventilspindeln vor.

Im Interesse besonders kompakter und gleichermaßen zuverlässiger und leistungsfähiger Stellantriebe ist der elektromechanische Wandler der Vorstufe, gemäß einer abermals anderen bevorzugten Weiterbildung der Erfindung, als piezoelektrischer Biegewandler ausgeführt. Ein solcher piezoelektrisch arbeitender Biegewandler kann mit geringster elektrischer Betätigungsenergie zuverlässig betrieben werden, was einem eigensicheren Betrieb entgegenkommt. Besonders bevorzugt ist dabei die Vorstufe baulich in das Gehäuse der Leistungsstufe integriert oder unmittelbar an diese angebaut. Dies gilt namentlich, wenn als Druckfluid der Vorstufe Luft verwendet wird. Durch entsprechend minimierte Luftvolumina durch kürzeste Verbindungskanäle kann ein hochdynamisches, geringste Reaktionszeiten aufweisendes, besonders steifes Betriebsverhalten erreicht werden, bei Reduzierung des Risikos von Schwingungen und Resonanzen, welche nachteilig wären für das Regelungsverhalten. Unter vergleichbaren Gesichtspunkten ist bevorzugt auch das Volumen des Steuerraumes minimiert.

Mit besonderem Nutzen lässt sich die vorliegende Erfindung umsetzen, wenn das Antriebselement des Stellantriebs genau einen fluidischen Arbeitsraum aufweist, der über einen Arbeitsausgang der Leistungsstufe mit den dem Steuerraum benachbarten ersten Ventilkammern beider Sitzventile in Verbindung steht, wobei die zweite Ventilkammer des ersten Sitzventils mit einer Druckfluidversorgung und die zweite Ventilkammer des zweiten Sitzventils mit einem Druckfluidablass in Verbindung steht. Eine solche Bauweise nutzt konsequent die durch die Erfindung bereitgestellten Möglichkeiten und stellt einen leistungsfähigen, kompakten, zuverlässigen Stellantrieb zur Verfügung.

Besonders bevorzugt wird die Vorstufe des Stellantriebs mit einem Druckfluid betrieben, mit welchem - über die Leistungsstufe - auch das Antriebselement des Stellantriebs beaufschlagt wird. Dies gilt jedenfalls im Falle eines pneumatischen Stellantriebs, bei welchem sowohl das Antriebselement als auch die Vorstufe des proportionalen Stellungsreglers mit Druckluft betrieben wird. Sowohl die Vorstufe des Stellungsreglers als auch dessen Leistungsstufe können dabei aus derselben Druckluftversorgung gespeist werden, wobei besonders bevorzugt dem Drucklufteingang der Vorstufe ein Druckbegrenzer vorgeschaltet bzw. zugeordnet ist.

Unter sicherheitstechnischen Aspekten ist schließlich besonders günstig, wenn die Sitzventile der Leistungsstufe ohne elektrisches Eingangssignal an der Vorstufe die identische Schaltstellung einnehmen wie bei Ausfall der Druckfluidversorgung. Auf diese Weise ergibt sich unabhängig davon, welche Komponente bzw. welcher Bereich (elektrisch bzw. pneumatisch/hydraulisch - des Stellantriebs von einer Störung bzw. Fehlfunktion betroffen ist, das identische Schaltverhalten des Stellungsreglers, sodass das von diesem beaufschlagte Antriebselement stets die identische vorgegebene Ausfallstellung einnimmt. Ein zuverlässiges Fail Safe Verhalten ist auf diese Weise gewährleistet.

Im Folgenden wird die vorliegende Erfindung anhand der in der Zeichnung veranschaulichten bevorzugten Ausführungsbeispiele näher erläutert. Dabei zeigt
- Fig. 1: in schematischer Darstellung ein erstes Ausführungsbeispiel eines pneumatisch ausgeführten erfindungsgemäßen Stellantriebs,
- Fig. 2: einen Kennlinienverlauf der Leistungsstufe, d.h. der Öffnungsquerschnitte der beiden Sitzventile über dem Steuerdruck,
- Fig. 3: ein zweites Ausführungsbeispiel der Erfindung als eine Abwandlung des Ausführungsbeispiels nach Fig. 1 und
- Fig. 4: ein drittes Ausführungsbeispiel der Erfindung als eine Abwandlung des Ausführungsbeispiels nach Fig. 1.

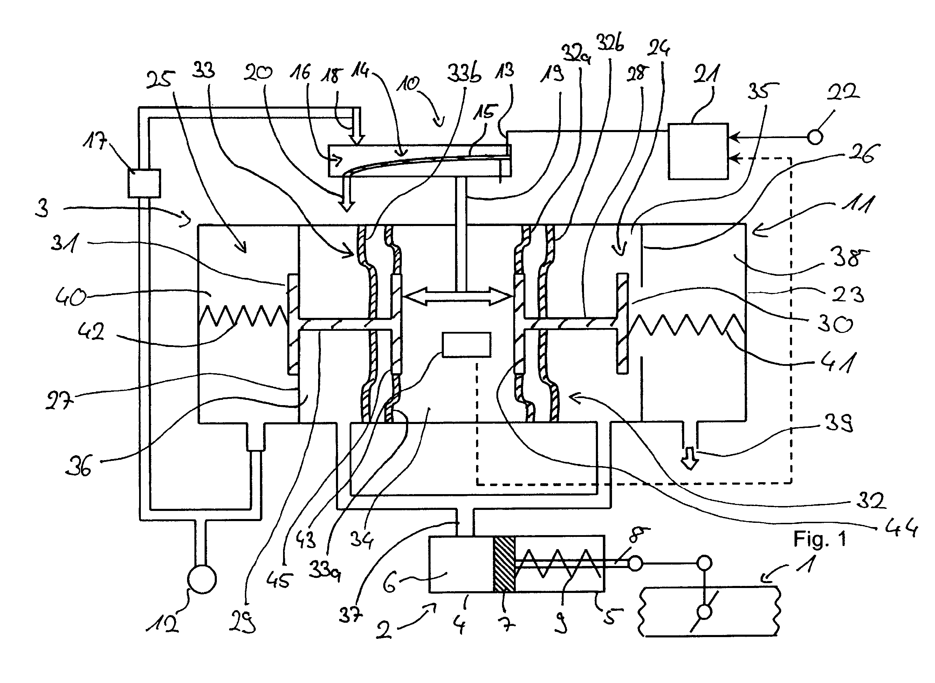

Der in Fig. 1 veranschaulichte pneumatische, der Betätigung einer Armatur 1 dienende Stellantrieb umfasst ein mit Druckluft beaufschlagbares Antriebselement 2 und einen die Druckluft-Beaufschlagung des Antriebselements regelnden proportionalen Stellungsregler 3. Das Antriebselement 2 ist dabei in Form eines einfachwirkenden Pneumatikzylinders 4 ausgeführt, der in als solches bekannter Weise ein Gehäuse 5, einen darin dichtend verschiebbar geführten, einen volumenveränderlichen Arbeitsraum 6 begrenzenden Kolben 7 samt Kolbenstange 8 und eine auf den Kolben 7 wirkende Vorspann- bzw. Rückstellfeder 9 umfasst.

Der proportionale Stellungsregler 3 ist zweistufig ausgeführt mit einer elektro-pneumatischen Vorstufe (Pilotstufe) 10 und einer pneumatischen Leistungsstufe 11. Der Versorgung sowohl der Vorstufe 10 als auch der Leistungsstufe 11 dient dabei ein und dieselbe Druckluftversorgung 12.

Die elektro-pneumatische Vorstufe 10 umfasst einen elektrischen Signaleingang 13, genau einen elektromechanischen Wandler 14 in Form eines piezoelektrischen Biegewandlers 15 und genau ein von diesem betätigtes Proportionalventil 16 mit einem - über das Duckreduzierventil 17 - an die Druckluftversorgung 12 angeschlossenen Drucklufteingang 18, einem Steuerdruckausgang 19 und einem Ablassausgang 20. In als solches bekannter Weise hängt der an dem Steuerdruckausgang 19 bestehende Druck von der spezifischen Geometrie des piezoelektrischen Biegewandlers 15 ab, die ihrerseits von der am elektrischen Signaleingang 13 anliegenden Spannung abhängt. Der elektrische Signaleingang 13 steht seinerseits über eine Regeleinheit 21 mit der Sollwerteingabe 22 in Verbindung.

Die pneumatische Leistungsstufe 11 umfasst zwei in Form einer Ventilgruppe in einem Gehäuse 23 untergebrachte, einander diametral gegenüberliegend angeordnete Sitzventile 24 und 25, welche jeweils einen gehäusefest angeordneten Ventilsitz 26 bzw. 27 und eine Ventilspindel 28 bzw. 29 mit daran angeordnetem Schließkörper 30 bzw. 31 umfassen. Die Ventilspindel 28 bzw. 29 ist dabei jeweils mit einer doppelwandigen Membraneinheit 32 bzw. 33 dicht und fest verbunden, wobei der innerhalb des Gehäuses 23 zwischen den beiden Membraneneinheiten 32 und 33 angeordnete Raum einen Steuerraum 34 bildet, an welchen der Steuerdruckausgang 19 der piezoelektrischen Vorstufe 10 angeschlossen ist. Im Detail ist die Ventilspindel 28 des Sitzventils 24 mit einer Druckplatte 44 fest verbunden, die funktionaler Teil der "Steuerdruckmembran" 32a ist, welche ihrerseits die dem Steuerraum 34 zugewandte Wand der (doppelwandigen) Membraneinheit 32 bildet. Die zweite Wand der Membraneinheit 32 bildet eine "Kammermembran" 32b, wobei der Raum zwischen der Steuerdruckmembran 32a und der Kammermembran 32b drucklos und belüftet ist. Entsprechendes gilt für das zweite Sitzventil 25. Die Membraneinheiten 32 und 33 dichten den Steuerraum 34 gegenüber jeweils einer ersten Ventilkammer 35 bzw. 36 des jeweiligen Sitzventils 24 bzw. 25 ab, wobei die beiden ersten Ventilkammern 35 und 36 miteinander und mit einem gemeinsamen Arbeitsausgang 37 der Leitungsstufe 11 kommunizieren, welcher seinerseits mit dem pneumatischen Arbeitsraum 6 des Antriebselements 2 in Verbindung steht. Die zweite Ventilkammer 38 des ersten Sitzventils 24 steht dabei mit einem Druckluftablass 39 in Verbindung, während die zweite Ventilkammer 40 des zweiten Sitzventils 25 mit der Druckluftversorgung 12 verbunden ist. Die Vorstufe 10 kann, ohne dass dies in der Zeichnung explizit gezeigt wäre, baulich in das Gehäuse 23 der Leistungsstufe 11 integriert oder unmittelbar an diese angebaut sein.

Auf beide Ventilspindeln 28 bzw. 29 wirkt jeweils eine Vorspann- bzw. Rückstellfeder 41 bzw. 42, und zwar dergestalt, dass von den beiden Sitzventilen 24 und 25 der Leistungsstufe 11 - bei Abwesenheit einer pneumatischen Beaufschlagung, d.h. bei drucklosem Steuerraum 34 (s.u.) - ein erstes, nämlich das in Fig. 1 rechts gezeigte erste Sitzventil 24, in eine geöffnete Stellung vorgespannt ist, wohingegen das zweite, nämlich das in Fig. 1 links gezeigte zweite Sitzventil 25, in eine geschlossene Stellung vorgespannt ist. Zu jedem der beiden Sitzventile 24 und 25 bildet die funktionale Kombination von Membraneinheit 32 bzw. 33 und Vorspann- bzw. Rückstellfeder 41 bzw. 42 einen - auf den betreffenden Schließkörper 30 bzw. 31 respektive die betreffende Ventilspindel 28 bzw. 29 wirkenden - Druck-Weg-Wandler in dem Sinne, dass sich die Stellung der jeweiligen Ventilspindel 28 bzw. 29 nach dem in dem Steuerraum 34 herrschenden Druck (Steuerdruck) richtet. Die weiter oben bereits erwähnte Anordnung der beiden Sitzventile 24 und 25 einander diametral gegenüberliegend erstreckt sich dabei auch auf die beiden Druck-Weg-Wandler, mittels derer, mit anderen Worten, die Sitzventile 24 und 25 pneumatisch betätigbar sind. Wesentlich ist insoweit, dass die beiden Druck-Weg-Wandler aus einem gemeinsamen Steuerraum 34 beaufschlagt werden, der mit dem Steuerdruckausgang 19 der Vorstufe 10 verbunden ist.

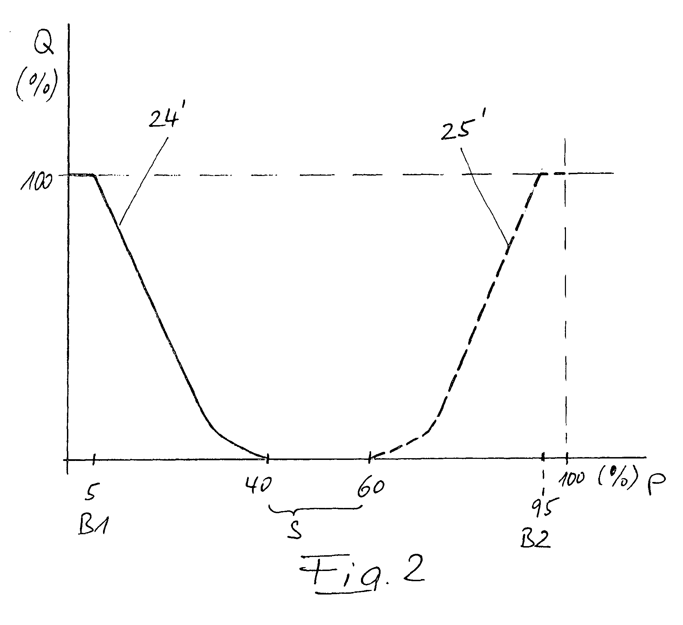

Der dem ersten Sitzventil 24 zugeordnete Druck-Weg-Wandler ist dergestalt auf den dem zweiten Sitzventil 25 zugeordneten Druck-Weg-Wandler abgestimmt (vgl. Fig. 2), dass bei einem stetigen Druckanstieg in dem Steuerraum 34, d.h. bei stetig steigendem Steuerdruck p über einen - durch einen unteren Betriebsdruck B1 und einen oberen Betriebsdruck B2 - begrenzten Arbeitsdruckbereich zunächst das erste Sitzventil 24 fortschreitend geschlossen und erst nach dem vollständigen Schließen des ersten Sitzventils 24 das zweite Sitzventil 25 fortschreitend geöffnet wird. Innerhalb eines einen Sperrbereich S bildenden Teilbereiches des Arbeitsdruckbereichs für den Steuerdruck sind beide Sitzventile 24 und 25 geschlossen, wobei der Sperrbereich etwa 20% des vom Steuerdruck insgesamt erreichbaren Steuerdruckbereichs einnimmt. Der Mittelwert des Steuerdruckbereichs liegt dabei innerhalb des Sperrbereichs S.

Der Arbeitsdruckbereich macht etwa 90% des vom Steuerdruck insgesamt erreichbaren Steuerdruckbereichs aus, was bedeutet, dass in den untersten 5% und den obersten 5% des Steuerdruckbereichs sich die jeweilige Stellung der beiden Sitzventile 24 und 25 nicht ändert. Wie dies in Fig. 2 veranschaulicht ist, weisen die jeweils ein Sitzventil 24 bzw. 25 und den zugeordneten Druck-Weg-Wandler umfassenden Einheiten einen nicht-linearen Verlauf der Kennlinie 24' bzw. 25' des Öffnungsquerschnitts Q über dem Steuerdruck p auf. Im Einzelnen liegt jeweils nahe bzw. benachbart dem Sperrbereich S in dem Sinne eine flache Kennlinie vor, dass für eine Veränderung des Öffnungsquerschnitts Q des Sitzventils 24 bzw. 25 um ein vorgegebenes Maß eine vergleichsweise große Änderung des Steuerdrucks p erforderlich ist, verglichen mit den weiter vom Sperrbereich S entfernten Bereichen des Kennfeldes. Solche Nicht-Linearitäten lassen sich insbesondere über eine geeignete Abstimmung von Ventilsitz 26 bzw. 27 und Schließkörper 30 bzw. 31 aufeinander bereitstellen, aber auch durch Maßnahmen auf Seiten der Druck-Weg-Wandler (z.B. der Membraneinheiten 32 bzw. 33 und/oder der Vorspann- und Rückstellfedern 41 bzw. 42).

Aus dem vorstehend erläuterten Aufbau ergibt sich die folgende Funktionsweise des Stellantriebs: Wird durch entsprechende Beaufschlagung der elektro-pneumatischen Vorstufe 10 durch den Sollwerteingang 22 und über die Regeleinheit 21 der in dem Steuerraum 34 herrschende Steuerdruck - ausgehend von zunächst drucklosem Zustand - allmählich erhöht, so beginnt nach etwa 5% Druckanstieg (bezogen auf den vom Steuerdruck insgesamt erreichbaren Steuerdruckbereich) das erste Sitzventil 24 zu schließen, wobei sich infolge der weiter oben erläuterten Kennlinie der Öffnungsquerschnitt des ersten Sitzventils 24 zunächst vergleichsweise rasch, später jedoch deutlich langsamer ändert. Etwa bei 40% des maximalen Steuerdrucks ist das erste Sitzventil vollständig geschlossen. Bei einer weiteren Steigerung des Steuerdrucks bis zum Erreichen von etwa 60% des maximalen Steuerdrucks verändert sich die Stellung der Sitzventile 24 und 25 nicht; hier sind beide Sitzventile gesperrt. Erst bei einer weiteren Zunahme des Steuerdrucks öffnet sich das zweite Sitzventil 25, und zwar zunächst allmählich, später dann rascher, und zwar bis es bei etwa 95% des maximalen Steuerdrucks seine vollständig geöffnete Stellung erreicht hat.

Infolge dieser Charakteristik des Stellungsreglers 3 und der weiter oben beschriebenen Anbindung von Druckluftversorgung 12 und Antriebselement 2 an diesen ist der Arbeitsraum 6 des Antriebselements 2 bei einem Steuerdruck innerhalb des Sperrbereichs S (40% bis 60% des Steuerdrucks) gesperrt, innerhalb des zwischen 0% und 40% liegenden Druckbereiches (bei unterschiedlichen Öffnungsquerschnitten des ersten Sitzventils 24) mit dem Druckluftablass 39 und innerhalb des zwischen 60% und 100% liegenden Druckbereiches (bei unterschiedlichen Öffnungsquerschnitten des zweiten Sitzventils 25) mit der Druckluftversorgung 12 verbunden. Demgemäß wird die Armatur 1 in Abhängigkeit von dem im Sterraum 34 herrschenden Steuerdruck (ohne Eigenluftverbrauch der Leistungsstufe 11) gehalten, mehr oder weniger dynamisch geschlossen oder aber - wiederum mehr oder weniger dynamisch - geöffnet.

Der Stellungsregler umfasst einen in dem Steuerraum 34 zwischen den beiden Sitzventilen 24 und 25 angeordneten Sensor 43, der den Relativabstand misst, den die beiden mit den Ventilspindeln 28 bzw. 29 der Sitzventile 24 bzw. 25 fest verbundenen Druckplatten 44 und 45 zueinander einhalten. Ein dem betreffenden Abstand entsprechendes - und somit für den aktuellen Betriebspunkt der Leistungsstufe 11 charakteristisches - Signal wird von dem Sensor 43 als rückgeführter Istwert der Regeleinheit 21 zugeführt. Statt den Abstand zwischen den Druckplatten 44 und 45 könnte der Sensor 43 alternativ auch den Abstand zwischen sonstigen steuerdruckreaktiven Elementen der beiden Druck-Weg-Wandler, zwischen denen er - ggf. auf einer Steuerplatine - angeordnet ist, ermitteln. Insoweit ist zu beachten, dass die den beiden Sitzventilen 24 und 25 zugeordneten Druck-Weg-Wandler und/oder Ventilspindeln 28 und 29 nicht starr miteinander gekoppelt sind.

Die Vorstufe 10 ist dergestalt ausgeführt, dass ohne ein auf sie geschaltetes elektrisches Eingangssignal der Steuerraum 34 drucklos ist, so dass das erste Sitzventil 24 offen und das zweite Sitzventil 25 geschlossen ist. Als Folge hiervon ist der Arbeitsraum 6 der Antriebseinheit 2 drucklos und der Kolben 7 der Antriebseinheit 2 nimmt die durch die Vorspann- und Rückstellfeder 9 vorgegebene Stellung ein. Damit ist die Stellung der Sitzventile 24 und 25 der Leistungsstufe 11 - wie auch die Stellung des Antriebselements 2 - bei Ausfall der Regeleinheit 21 (oder einem vergleichbaren Defekt) auf der Seite der Vorstufe 10 identisch wie im Falle eines Ausfalls der Druckluftversorgung 12. Der Stellantrieb hat damit ein definiertes und eindeutiges Fail-Safe-Verhalten.

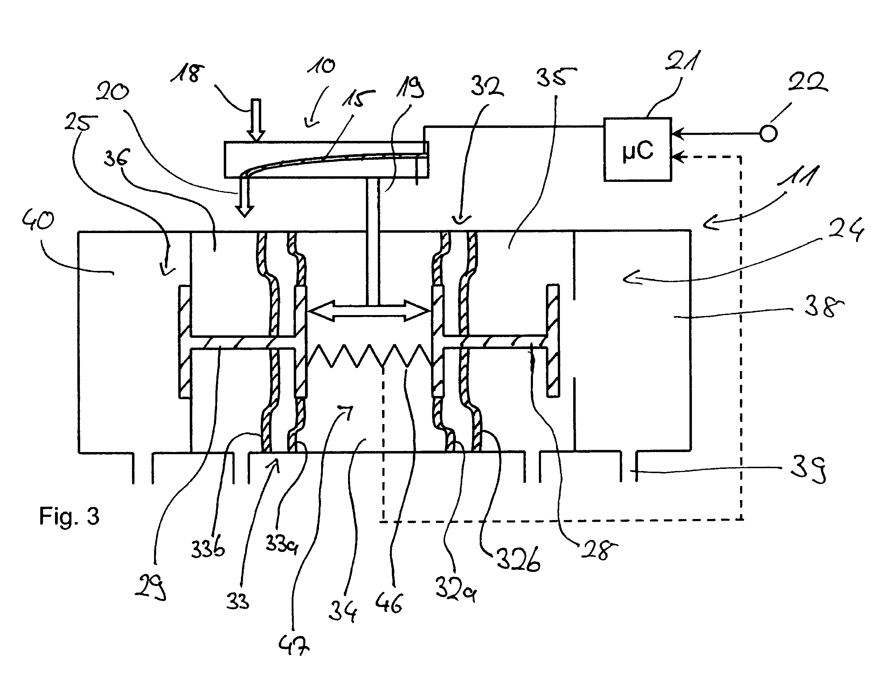

Die in Fig. 3 (nur in einem entsprechenden Ausschnitt) veranschaulichte Abwandlung des Stellantriebs nach Fig. 1 unterscheidet sich von der vorstehend erläuterten Ausführungsform primär durch eine andersartige Ausgestaltung der Druck-Weg-Wandler und des Sensors. Und zwar werden hier die auf die beiden Ventilspindeln 28 und 29 wirkenden Rückstellkräfte von einem gemeinsamen, in dem Steuerraum 34 angeordneten, auf Zug beanspruchten Federelement 46 bereitgestellt. Die erfindungsgemäß hierarchische, d.h. steuerdruckabhängig zueinander versetzt erfolgende Betätigung der beiden Sitzventile 24 und 25 wird demgemäß durch unterschiedliche Auslegung der beiden Membraneinheiten 32 und 33 hinsichtlich ihrer vom Steuerdruck beaufschlagten Fläche und/oder ihrer Steifigkeit erreicht. Das gemeinsame Federelement 46 stellt dabei überdies zugleich einen Sensor 47 dar, indem in es dergestalt eine Sensorfunktion integriert ist, dass die tatsächliche Dehnung des Federelements 46 erfasst und als für den Betriebspunkt der Leitungsstufe, d.h. die Stellung der beiden Sitzventile 24 und 25 charakteristische Größe auf die Regeleinheit 21 zurückgeführt wird.

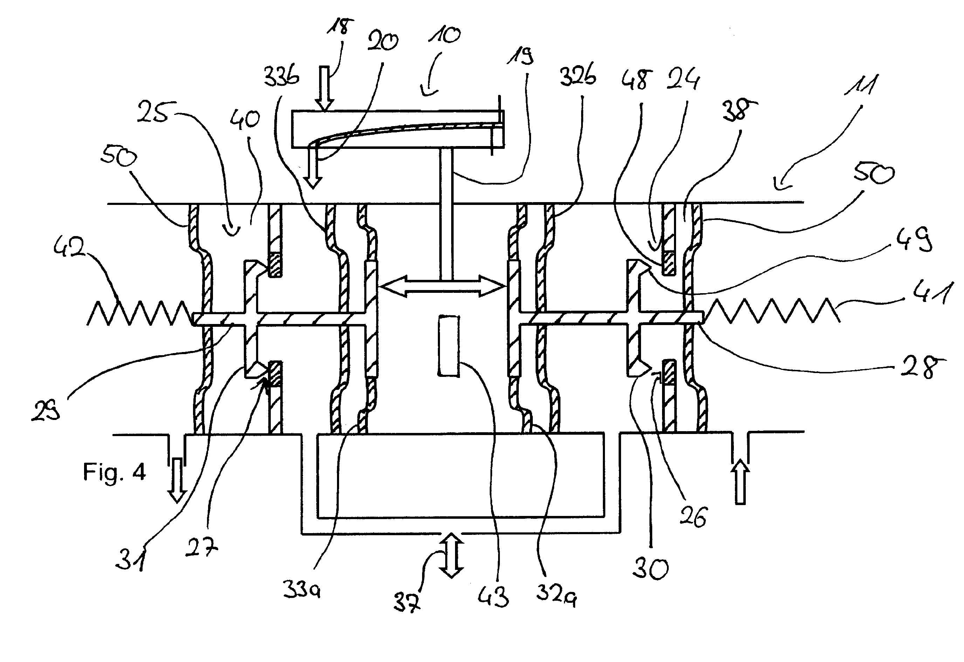

Fig. 4 verdeutlicht spezifische konstruktive Optionen zur Ausgestaltung der Sitzventile 24 und 25. So ist hier insbesondere die Verwendung von weichdichtenden Sitzventilen veranschaulicht, wobei jeweils der Ventilsitz 26 bzw. 27 an einer gefassten Dichtung 48 mit einer Härte zwischen Shore 70 und Shore 85 ausgeführt ist. Und an dem Schließkörper 30 bzw. 31 der jeweiligen Ventilspindel 28 bzw. 29 ist eine definierte Dichtkante 49 ausgeführt. Hierdurch lässt sich die bereits in Fig. 2 angedeutete Nicht-Linearität der Ventilkennlinien 24' und 25' (Öffnungsquerschnitt Q vs. Steuerdruck p) noch ausgeprägter vorgeben, um eine möglichst feinfühlige Verstellung des Antriebselements 2 zu ermöglichen.

Weiterhin ist in Fig. 4 ersichtlich, dass mit der Spindel 28 bzw. 29 jedes Sitzventils 24 bzw. 25 eine zweite Membraneinheit (Kammermembran) 50 verbunden ist, welche die jeweilige zweite Ventilkammer 38 bzw. 40 des jeweiligen Sitzventils gegenüber der Umgebung abdichtet.

## Patentansprüche

1. Fluidischer, insbesondere pneumatischer Stellantrieb, insbesondere Armaturen-Stellantrieb, umfassend ein mit Druckfluid beaufschlagbares Antriebselement (2) und einen die Druckfluid-Beaufschlagung des Antriebselements regelnden proportionalen Stellungsregler (3), mit den folgenden Merkmalen:
der Stellungsregler (3) ist zweistufig ausgeführt mit einer elektro-fluidischen Vorstufe (10) und einer fluidischen Leistungsstufe (11);
die elektro-fluidische Vorstufe (10) umfasst einen elektrischen Signaleingang (13), genau einen elektromechanischen Wandler (14) und genau ein von diesem betätigtes Proportionalventil (16) mit einem Druckfluideingang (18), einem Steuerdruckausgang (19) und einem Ablassausgang (20);
die fluidische Leistungsstufe (11) umfasst zwei in einem gemeinsamen Gehäuse (23) untergebrachte Sitzventile (24, 25), welche jeweils über einen auf die betreffende Ventilspindel (28, 29) wirkenden Druck-Weg-Wandler pneumatisch betätigbar sind;
die beiden Druck-Weg-Wandler werden aus einem gemeinsamen Steuerraum (34) beaufschlagt, der in dem Gehäuse (23) zwischen den Sitzventilen (24, 25) angeordnet und mit dem Steuerdruckausgang (19) der Vorstufe (10) verbunden ist;
von den beiden Sitzventilen (24, 25) der Leistungsstufe (11) ist bei Abwesenheit einer fluidischen Beaufschlagung, d.h. bei drucklosem Steuerraum (34) ein erstes (24) in eine geöffnete und ein zweites (25) in eine geschlossene Stellung vorgespannt;
der dem ersten Sitzventil (24) zugeordnete Druck-Weg-Wandler ist dergestalt auf den dem zweiten Sitzventil (25) zugeordneten Druck-Weg-Wandler abgestimmt, dass bei einem stetigen Druckanstieg in dem Steuerraum (34) über einen durch einen unteren Betriebsdruck (B1) und einen oberen Betriebsdruck (B2) definierten Arbeitsdruckbereich zunächst das erste Sitzventil (24) fortschreitend geschlossen und erst nach dem vollständigen Schließen des ersten Sitzventils (24) das zweite Sitzventil (25) fortschreitend geöffnet wird.

2. Stellantrieb nach Anspruch 1, **dadurch gekennzeichnet, dass** innerhalb eines einen Sperrbereich (S) bildenden Teilbereiches des Arbeitsdruckbereichs für den Steuerdruck (p) beide Sitzventile (24, 25) geschlossen sind.

3. Stellantrieb nach Anspruch 2, **dadurch gekennzeichnet, dass** der Sperrbereich (S) zwischen 10% und 30% des vom Steuerdruck insgesamt erreichbaren Steuerdruckbereichs einnimmt, wobei bevorzugt der Mittelwert des Steuerdruckbereichs innerhalb des Sperrbereichs (S) liegt.

4. Stellantrieb nach einem der Ansprüche 1 bis 3,
**dadurch gekennzeichnet, dass** der Arbeitsdruckbereich zwischen 95% und 85% des vom Steuerdruck insgesamt erreichbaren Steuerdruckbereichs ausmacht.

5. Stellantrieb nach einem der Ansprüche 1 bis 4, **dadurch gekennzeichnet, dass** die jeweils ein Sitzventil (24; 25) und den zugeordneten Druck-Weg-Wandler umfassenden Einheiten einen nicht-linearen Verlauf der Kennlinie (24'; 25') des Öffnungsquerschnitts (Q) über dem Steuerdruck (p) aufweisen.

6. Stellantrieb nach einem der Ansprüche 1 bis 5, **dadurch gekennzeichnet, dass** die beiden Sitzventile (24, 25) weichdichtend ausgeführt sind, wobei bevorzugt jeweils ein weicher Ventilsitz (26, 27) mit einer Härte zwischen Shore 70 und Shore 85 vorgesehen ist.

7. Stellantrieb nach Anspruch 6, **dadurch gekennzeichnet, dass** der Ventilsitz (26, 27) an einer gefassten Dichtung (48) und/oder eine Dichtkante (49) auf dem bewegbaren Schließkörper (30, 31) ausgeführt ist.

8. Stellantrieb nach einem der Ansprüche 1 bis 7, **dadurch gekennzeichnet, dass** mit der Spindel (28, 29) jedes Sitzventils (24, 25) eine zugeordnete Membraneinheit (32, 33) verbunden ist, welche den Steuerraum (34) gegenüber einer ersten Ventilkammer (35, 36) des jeweiligen Sitzventils abdichtet.

9. Stellantrieb nach Anspruch 8, **dadurch gekennzeichnet, dass** mit der Spindel (28, 29) jedes Sitzventils (24, 25) eine zweite Membran (50) verbunden ist, welche die zweite Ventilkammer (38, 40) des jeweiligen Sitzventils gegenüber der Umgebung abdichtet.

10. Stellantrieb nach einem der Ansprüche 1 bis 9, **dadurch gekennzeichnet, dass** die jeweils ein Sitzventil (24, 25) und den zugeordneten Druck-Weg-Wandler umfassenden Einheiten einander diametral gegenüberliegen.

11. Stellantrieb nach Anspruch 10, **dadurch gekennzeichnet, dass** die den beiden Sitzventilen (24, 25) zugeordneten Druck-Weg-Wandler und/oder Ventilspindeln (28, 29) nicht starr miteinander gekoppelt sind.

12. Stellantrieb nach Anspruch 11, **dadurch gekennzeichnet, dass** ein Sensor (43; 47) vorgesehen ist, der ein dem Relativabstand von steuerdruckreaktiven Elementen der beiden Druck-Weg-Wandler und/oder der Ventilspindeln (28, 29) zueinander entsprechendes Signal bereitstellt.

13. Stellantrieb nach Anspruch 12, **dadurch gekennzeichnet, dass** der Sensor (43) auf einer Steuerplatine angeordnet ist, welche ihrerseits zwischen steuerdruckreaktiven Elementen der beiden Druck-Weg-Wandler angeordnet ist.

14. Stellantrieb nach einem der Ansprüche 1 bis 13, **dadurch gekennzeichnet, dass** der elektromechanische Wandler (14) der Vorstufe (10) als piezoelektrischer Biegewandler (15) ausgeführt ist, wobei bevorzugt die Vorstufe baulich in das Gehäuse (23) der Leistungsstufe (11) integriert oder unmittelbar an diese angebaut ist.

15. Stellantrieb nach einem der Ansprüche 1 bis 14, **dadurch gekennzeichnet, dass** das Antriebselement (2) genau einen fluidischen Arbeitsraum (6) aufweist, der über einen Arbeitsausgang (37) der Leitungsstufe (11) mit den dem Steuerraum (34) benachbarten ersten Ventilkammern (35, 36) beider Sitzventile (24, 25) in Verbindung steht, wobei die zweite Ventilkammer (38) des ersten Sitzventils (24) mit einem Druckfluidablass (39) und die zweite Ventilkammer (40) des zweiten Sitzventils (25) mit einer Druckfluidversorgung (12) in Verbindung steht.

16. Stellantrieb nach Anspruch 15, **dadurch gekennzeichnet, dass** an die Druckfluidversorgung (12) über einen Druckbegrenzer (17) auch der Druckfluideingang (18) der Vorstufe (10) angeschlossen ist.

17. Stellantrieb nach Anspruch 15 oder Anspruch 16, **dadurch gekennzeichnet, dass** die Sitzventile (24, 25) der Leistungsstufe (11) ohne elektrisches Eingangssignal an der Vorstufe (10) die identische Schaltstellung einnehmen wie bei Ausfall der Druckfluidversorgung (12).

## Claims

1. A fluidic, especially pneumatic positioning drive, especially a valve-positioning drive, comprising a drive element (2) to which pressurized fluid can be admitted and a proportional position regulator (3) that regulates the admission of pressurized fluid to the drive element, with the following features; the position regulator (3) is constructed in two stages, comprising an electrofluidic pilot stage (10) and a fluidic power stage (11);
the electrofluidic pilot stage (10) comprises an electrical signal input (13), precisely one electromechanical transducer (14) and precisely one proportional valve (16) actuated thereby, with a pressurized-fluid inlet (18), a control-pressure outlet (19) and a vent outlet (20); the fluidic power stage (11) comprises two poppet valves (24, 25), which are mounted in a housing (23) and which can be pneumatically actuated via a respective pressure-displacement transducer acting on the valve spindle (28, 29) in question;
the two pressure-displacement transducers are pressurized from a common control chamber (34),
which is in communication with the control-pressure outlet (19) of the pilot stage (10); in the absence of fluidic pressurization, i.e. when the control chamber (34) is unpressurized, a first (24) of the two poppet valves (24, 25) of the power stage (11) is biased into an open position and a second (25) into a closed position;
the pressure-displacement transducer associated with the first poppet valve (24) is matched to the pressure-displacement transducer associated with the second poppet valve (25) in such a way that, during a steady rise of the pressure in the control chamber (34) over a working-pressure range defined by a lower operating pressure (B1) and an upper operating pressure (B2), the first poppet valve (24) is closed progressively at first and, only after the first poppet valve (24) has been closed completely, is the second poppet valve (25) opened progressively.

2. A positioning drive according to claim 1, **characterized in that** both poppet valves (24, 25) are closed within a partial range, constituting a shutoff range (S), of the working-pressure range for the control pressure (p).

3. A positioning drive according to claim 2, **characterized in that** the shutoff range (S) occupies between 10% and 30% of the control-pressure range attainable on the whole by the control pressure, and the mean value of the control-pressure range preferably lies within the shutoff range (S).

4. A positioning drive according to one of claims 1 to 3, **characterized in that** the working-pressure range makes up between 95% and 85% of the control-pressure range attainable in total by the control pressure.

5. A positioning drive according to one of claims 1 to 4, **characterized in that** the units respectively comprising a poppet valve (24, 25) and the associated pressure-displacement transducer have a nonlinear path of the characteristic curve (24'; 25') of opening cross section (Q) versus control pressure (p).

6. A positioning drive according to one of claims 1 to 5, **characterized in that** the two poppet valves (24, 25) are constructed with soft-sealing capability, in which case preferably a soft valve seat (26, 27) with a hardness between Shore 70 and Shore 85 respectively is provided.

7. A positioning drive according to claim 6, **characterized in that** the valve seat (26, 27) is constructed on a captive seal (48) and/or a sealing edge (49) is constructed on the movable closing member (30, 31).

8. A positioning drive according to one of claims 1 to 7, **characterized in that** an associated diaphragm unit (32, 33), which seals off the control chamber (34) from a first valve chamber (35, 36) of the respective poppet valve, is joined to the spindle (28, 29) of each poppet valve (24, 25).

9. A positioning drive according to claim 8, **characterized in that** a second diaphragm (50),
which seals off the second valve chamber (38, 40) of the respective poppet valve from the environment, is joined to the spindle (28, 29) of each poppet valve (24, 25).

10. A positioning drive according to one of claims 1 to 9, **characterized in that** the units comprising respectively a poppet valve (24, 25) and the associated pressure-displacement transducer are disposed diametrically opposite one another.

11. A positioning drive according to claim 10, **characterized in that** the pressure-displacement transducers associated with the two poppet valves (24, 25) and/or valve spindles (28, 29) are not rigidly coupled with one another.

12. A positioning drive according to claim 11, **characterized in that** a sensor (43; 47) is provided which generates a signal corresponding to the relative distance from one another of elements of the two pressure-displacement transducers that react to control pressure and/or of the valve spindles (28, 29).

13. A positioning drive according to claim 12, **characterized in that** the sensor (43) is disposed on a control platen, which in turn is disposed between elements of the two pressure-displacement transducers that react to control pressure.

14. A positioning drive according to one of claims 1 to 13, **characterized in that** the electromagnetic transducer (14) of the pilot stage (10) is constructed as a piezoelectric bending transducer (15), wherein the pilot stage is preferably integrated structurally into the housing (23) of the power stage (11) or built directly onto it.

15. A positioning drive according to one of claims 1 to 14, **characterized in that** the drive element (2) has precisely one fluidic working chamber (6), which is in communication via a working outlet (37) of the power stage (11) with the first valve chambers (35, 36), which are adjacent to the control chamber (34), of both poppet valves (24, 25), wherein the second valve chamber (38) of the first poppet valve (24) is in communication with a pressurized-fluid vent (39) and the second valve chamber (40) of the second poppet valve (25) is in communication with a pressurized-fluid supply (12) .

16. A positioning drive according to claim 15, **characterized in that** the pressurized-fluid inlet (18) of the pilot stage (10) is also connected to the pressurized-fluid supply (12) via a pressure limiter (17).

17. A positioning drive according to claim 15 or claim 16, **characterized in that** the poppet valves (24, 25) of the power stage (11) occupy a switched position identical to that during failure of the pressurized-fluid supply (12) in the absence of electrical input signal to the pilot stage (10).

## Revendications

1. Commande de réglage fluidique, en particulier pneumatique, en particulier commande de réglage de robinets, comprenant un élément propulseur (2) pouvant être sollicité par du fluide de pression et un régleur de position proportionnel régulant la sollicitation par du fluide de pression de l'élément propulseur (3), comportant les caractéristiques suivantes :
le régleur de position (3) est réalisé en deux niveaux avec un niveau préliminaire électrofluidique (10) et un niveau de puissance fluidique (11) ;
le niveau préliminaire électrofluidique (10) comprend une entrée de signal électrique (13), précisément un convertisseur électromagnétique (14) et précisément une soupape proportionnelle actionnée par celui-ci (16) comportant une entrée de fluide de pression (18), une sortie de pression de commande (19) et une sortie d'évacuation (20) ;
le niveau de puissance fluidique (11) comprend deux soupapes à siège (24, 25) logées dans un boîtier commun (23) et qui sont actionnables respectivement par système pneumatique via un convertisseur de course de pression agissant sur la broche de soupape concernée (28, 29) ; les deux convertisseurs de course de pression sont sollicités à partir d'un espace de commande commun (34) qui est disposé dans le boîtier (23) entre les soupapes à siège (24, 25) et reliée à la sortie de pression de commande (19) du niveau préliminaire (10) ;
parmi les deux soupapes à siège (24, 25) du niveau de puissance (11), en l'absence d'une sollicitation fluidique, c'est-à-dire lorsque l'espace de commande (34) est hors pression, une première (24) est précontrainte dans une position ouverte et une seconde (25) dans une position fermée ;
le convertisseur de course de pression associé à la première soupape à siège (24) est conçu en fonction du convertisseur de course de pression associé à la seconde soupape à siège (25) de manière à ce que, en cas d'une hausse de pression constante dans l'espace de commande (34), au moyen d'une zone de pression de travail définie par une pression de fonctionnement inférieure (B1) et une pression de fonctionnement supérieure (B2), la première soupape à siège (24) est d'abord fermée progressivement et c'est seulement après la fermeture complète de la première soupape à siège (24) que la seconde soupape à siège (25) est ouverte progressivement.

2. Commande de réglage selon la revendication 1, **caractérisée en ce que**, à l'intérieur d'une sous-partie formant une zone de blocage (S) de la plage de pression de travail pour la pression de commande (p), les deux soupapes à siège (24, 25) sont fermées.

3. Commande de réglage selon la revendication 2, **caractérisée en ce que** la zone de blocage (S) occupe de 10 % à 30 % de la plage de pression de commande pouvant globalement être atteinte par la pression de commande, la valeur moyenne de la plage de pression de travail se situant de préférence dans la zone de blocage (S) .

4. Commande de réglage selon une des revendications 1 à 3, **caractérisée en ce que** la plage de pression de travail représente de 95 % à 85 % de la plage de pression de commande pouvant globalement être atteinte par la pression de commande.

5. Commande de réglage selon une des revendications 1 à 4, **caractérisée en ce que** les unités comprenant respectivement une soupape à siège (24 ; 25) et le convertisseur de course de pression associé présentent une évolution non linéaire de la ligne caractéristique (24' ; 25') de la section transversale d'ouverture (Q) au-dessus de la pression de commande (p).

6. Commande de réglage selon une des revendications 1 à 5, **caractérisée en ce que** les deux soupapes à siège (24, 25) sont réalisées avec une étanchéité molle, un siège de soupape mou (26, 27) ayant respectivement une dureté comprise entre Shore 70 et Shore 85 étant prévu.

7. Commande de réglage selon la revendication 6, **caractérisée en ce que** le siège de soupape (26, 27) est réalisé au niveau d'un joint serti (48) et/ou d'un bord d'étanchéité (49) sur le corps de fermeture mobile (30, 31).

8. Commande de réglage selon une des revendications 1 à 7, **caractérisée en ce qu'**est reliée à la broche (28, 29) de chaque soupape à siège (24, 25) une unité à membrane associée (32, 33) qui isole l'espace de commande (34) par rapport à une première chambre de soupape (35, 36) de la soupape à siège respective.

9. Commande de réglage selon la revendication 8, **caractérisée en ce qu'**est reliée à la broche (28, 29) de chaque soupape à siège (24, 25) une seconde membrane (50) qui isole la seconde chambre de soupape (38, 40) de la soupape à siège respective par rapport à l'environnement.

10. Commande de réglage selon une des revendications 1 à 9, **caractérisée en ce que** les unités comprenant respectivement une soupape à siège (24, 25) et le convertisseur de course de pression associé sont opposés diamétralement l'une à l'autre.

11. Commande de réglage selon la revendication 10, **caractérisé en ce que** le convertisseur de course de pression et/ou les broches de soupape (28, 29) associées aux soupapes à siège (24, 25) ne sont pas couplés rigidement les uns aux autres.

12. Commande de réglage selon la revendication 11, **caractérisée en ce qu'**il est prévu un capteur (43 ; 47) qui fournit un signal correspondant à la distance relative entre les éléments réactifs à la pression de commande des deux convertisseurs de course de pression et/ou les broches de soupape (28, 29).

13. Commande de réglage selon la revendication 12, **caractérisé en ce que** le capteur (43) est disposé sur une platine de commande qui est de son côté disposée entre des éléments réactifs à la pression de commande des deux convertisseurs de course de pression.

14. Commande de réglage selon une des revendications 1 à 13, **caractérisée en ce que** le convertisseur électromécanique (14) du niveau préliminaire (10) se présente sous forme d'un transducteur de flexion piézo-électrique (15), le niveau préliminaire étant de préférence intégré structurellement dans le boîtier (23) du niveau préliminaire (11) ou monté directement sur celui-ci.

15. Commande de réglage selon une des revendications 1 à 14, **caractérisée en ce que** l'élément propulseur (2) présente précisément un espace de travail fluidique (6) qui est en liaison via une sortie de travail (37) du niveau préliminaire (11) avec les premières chambres de soupape (35, 36) associées à l'espace de commande (34) des deux soupapes à siège (24, 25), la seconde chambre de soupape (38) de la première soupape à siège (24) étant en liaison avec une évacuation de fluide de pression (39) et la seconde chambre de soupape (40) de la seconde soupape à siège (25) avec une alimentation en fluide de pression (12).

16. Commande de réglage selon la revendication 15, **caractérisé en ce que** l'entrée de fluide de pression (18) du niveau préliminaire (10) est aussi raccordée à l'alimentation en fluide de pression (12) via un limiteur de pression (17).

17. Commande de réglage selon la revendication 15 ou 16, **caractérisée en ce que** les soupapes à siège (24, 25) du niveau préliminaire (11) prennent, sans signal d'entrée au niveau préliminaire (10), la même position de commutation qu'en cas de panne de l'alimentation en fluide de pression (12).
